(19) Europäisches Patentamt / European Patent Office / Office européen des brevets

(11) **EP 2 383 371 B1**

(12) **EUROPEAN PATENT SPECIFICATION**

(45) Date of publication and mention
of the grant of the patent:
**14.08.2019   Bulletin 2019/33**

(51) Int Cl.:
*C23C 24/08* (2006.01)    *H01G 9/055* (2006.01)
*H01M 4/66* (2006.01)    *C23C 8/02* (2006.01)
*C23C 8/04* (2006.01)    *C23C 8/60* (2006.01)
*C23C 26/00* (2006.01)    *C23C 28/00* (2006.01)
*H01G 11/26* (2013.01)    *H01G 11/28* (2013.01)
*H01G 11/42* (2013.01)

(21) Application number: **09839153.5**

(22) Date of filing: **28.01.2009**

(86) International application number:
**PCT/JP2009/051308**

(87) International publication number:
**WO 2010/086961 (05.08.2010 Gazette 2010/31)**

(54) **CARBON-COATED ALUMINUM MEMBER AND METHOD FOR PRODUCING THE SAME**

KOHLENSTOFFBESCHICHTETES ALUMINIUMSELEMENT UND HERSTELLUNGSVERFAHREN DAFÜR

ÉLÉMENT EN ALUMINIUM REVÊTU DE CARBONE ET SON PROCÉDÉ DE FABRICATION

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**02.11.2011   Bulletin 2011/44**

(73) Proprietor: **Toyo Aluminium Kabushiki Kaisha
Osaka-shi, Osaka 541-0056 (JP)**

(72) Inventors:
• **INOUE, Hidetoshi**
  **Osaka-shi**
  **Osaka 541-0056 (JP)**
• **NAKAYAMA, Kunihiko**
  **Osaka-shi**
  **Osaka 541-0056 (JP)**
• **ASHITAKA, Zenya**
  **Osaka-shi**
  **Osaka 541-0056 (JP)**

(74) Representative: **Grünecker Patent- und
Rechtsanwälte
PartG mbB
Leopoldstraße 4
80802 München (DE)**

(56) References cited:
**EP-A1- 1 609 878        EP-A1- 1 798 743
WO-A1-2004/087984   WO-A1-2008/142913**

**Description**

TECHNICAL FIELD

The present invention relates generally to a carbon-coated aluminum material manufactured by coating a surface of an aluminum material with carbon and a method for manufacturing the carbon-coated aluminum material, and in particular, to a carbon-coated aluminum material used for current collectors and electrodes of a variety of capacitors, current collectors and electrodes of a variety of batteries, or the like, and a method for manufacturing the carbon-coated aluminum material.

BACKGROUND ART

Conventionally, in a case where an aluminum material is used as it is as a material for current collectors or electrodes, an oxide film formed on a surface of the aluminum material is passivated and as a result, electrical conductivity of the surface thereof is reduced, thereby incurring a problem of causing insulation. In order to solve this problem, a method in which the electrical conductivity of the surface of the aluminum material is improved by coating the surface of thereof with carbon has been adopted.

For example, as disclosed in Japanese Patent Application Laid-Open Publication No. 2000-164466 (hereinafter, referred to as Patent Document 1), there has been a method in which a carbon film is formed on the surface of the aluminum material by employing a vacuum deposition method. Specifically, it is described in Patent Document 1 that as a method for manufacturing electrodes used for capacitors or batteries, an interlayer film of carbon is provided on a current collector formed of aluminum and an active material layer is applied thereon.

In addition, though an application is different from that described above, disclosed in, for example, Japanese Patent Application Laid-Open Publication No. 2003-342702 (hereinafter, referred to as Patent Document 2) is a method for hardening an aluminum surface, which allows improvement of inferior wear resistance as a shortcoming of the aluminum and enables utilization thereof as mechanical sliding parts, structural members for use in machines, or lightweight polishing tools by generating on the surface of the aluminum a carbonized aluminum coating film having a high hardness. Specifically, it is described therein as the method for hardening the surface of the aluminum that a viscous substance in which an organic binder is mixed with aluminum fine powder is applied on the surface of the aluminum, the resultant is dried, the organic binder is thereafter carbonized by heating the resultant in a nonoxidative or neutral atmosphere at a temperature in a range of 300°C through 600°C, and this activated carbon and the aluminum fine powder are reacted with each other, thereby forming on the surface of the aluminum the carbonized aluminum coating film having the high hardness.

However, in these manufacturing methods, there have been problems that properties of adhesion between the active material layer and the aluminum material are still very insufficient and that properties of adhesion between the carbonized aluminum coating film and the aluminum material are still very insufficient.

Therefore, carbon-coated aluminum and a method for manufacturing the carbon-coated aluminum which improve the properties of the adhesion between the active material layer and the aluminum material are disclosed in, for example, WO_2004/087984 (hereinafter, referred to as Patent Document 3). It is disclosed in Patent Document 3 as one embodiment of the carbon-coated aluminum and the method for manufacturing the carbon-coated aluminum that a carbon-containing substance is caused to adhere to a surface of a aluminum material and thereafter, the resultant is heated in a space including a hydrocarbon-containing substance, thereby forming a carbon-containing layer on the surface of the aluminum material, and the properties of the adhesion between the carbon-containing substance and the aluminum material is improved by an intervening layer, formed between the aluminum material and the carbon-containing substance and containing a carbide of the aluminum. Patent Documents 4 to 6 relate methods of coating aluminum with carbon-containing substances, however, without disclosing an organic layer having a thickness of 50 nm or less formed on the surface of each of the carbon-containing particles.

Patent Document 1: Japanese Patent Application Laid-Open Publication No. 2000-164466
Patent Document 2: Japanese Patent Application Laid-Open Publication No. 2003-342702
Patent Document 3: WO_2004/087984
Patent Document 4: EP 1 798 742 A1
Patent Document 5: WO 2008/142913 A1
Patent Document 6: EP 1 609 878 A1

## DISCLOSURE OF THE INVENTION

Problems to be solved by the invention

However, as a range of applications of the carbon-coated aluminum material has been expanded, in order to cope with demands in a variety of applications, it is required, in a structure of the carbon-coated aluminum described in Patent Document 3, to further improve properties of adhesion between the aluminum material and a carbon-containing layer obtained in a case where a thickness of the carbon-containing layer is increased and properties of adhesion among carbon-containing particles included in the carbon-containing layer.

Therefore, objects of the present invention are to provide a carbon-coated aluminum material capable of improving properties of adhesion between a carbon-containing layer and an aluminum material and properties of mutual adhesion among carbon-containing particles included in the carbon-containing layer; and a method for manufacturing the carbon-coated aluminum material.

Means for solving the problems

The present inventors have repeated eager researches, and as a result, obtained the below-described findings. Specifically, before causing carbon-containing particles to adhere to a surface of an aluminum material, a resin layer is previously formed on a surface of each of the carbon-containing particles. Thereafter, in a space including a hydrocarbon-containing substance, the carbon-containing particles each having a surface on which the resin layer has been formed are heated, whereby the resin layer formed on the surface of each of the carbon-containing particles remains as an organic layer even after the heating step. This enhances properties of adhesion between a carbon-containing layer and the surface of the aluminum material and in addition, enhances properties of mutual adhesion among the carbon-containing particles included in the carbon-containing layer. As a result, obtained were the findings that the properties of the adhesion between the carbon-containing layer and the aluminum material and the properties of the mutual adhesion among the carbon-containing particles included in the carbon-containing layer can be further enhanced, as compared with the conventional carbon-coated aluminum material. Based on these findings obtained by the present inventors, the present invention was made.

A carbon-coated aluminum material according to the present invention, comprises: an aluminum material; a carbon-containing layer formed on a surface of the aluminum material; and an interposing layer formed between the aluminum material and the carbon-containing layer and on at least one region of the surface of the aluminum material, the interposing layer including a carbide of aluminum. The carbon-containing layer includes a plurality of carbon-containing particles, and an organic layer is formed on a surface of each of the carbon-containing particles, the organic layer including at least elements of carbon, hydrogen and oxygen, and the thickness of the organic layer being greater than or equal to 1 nm and less than or equal to 50 nm.

In the carbon-coated aluminum material according to the present invention, the interposing layer formed between the aluminum material and the carbon-containing layer and including the carbide of the aluminum first act to enhance properties of adhesion between the surface of the aluminum material and the carbon-containing layer which is an active material layer allowing a surface area of the aluminum material to be increased. In addition, the organic layer is present on the surface of each of the carbon-containing particles, thereby allowing enhancement of properties of adhesion between the surface of the aluminum material and the surfaces of the plurality of carbon-containing particles included in the carbon-containing layer. In addition to these actions, the organic layer is formed on the surface of each of the carbon-containing particles, thereby allowing enhancement of properties of mutual adhesion among the plurality of carbon-containing particles. As a result of interplay of the above-mentioned actions, the properties of the adhesion between the aluminum material and the carbon-containing layer can be further enhanced.

The organic layer includes elements of at least carbon, hydrogen, and oxygen.

The thickness of this organic layer is less than or equal to 50 nm, and further, it is preferable that the thickness thereof is less than or equal to 30 nm. In order to effectively exhibit the above-mentioned actions, the thickness of the organic layer is greater than or equal to 1 nm.

The organic layer has the thickness which is within the above-mentioned range, thereby allowing the carbon-containing layer including the plurality of carbon-containing particles to maintain an electrical conductivity and enabling the properties of the adhesion between the aluminum material and the carbon-containing layer to be enhanced.

It is preferable that the carbon-containing layer includes a protruding part formed so as to extend outwardly from a surface of the interposing layer and the protruding part includes a carbide of aluminum.

This causes the protruding part to act to increase the surface area of the aluminum material. In addition, the interposing layer including the carbide of the aluminum is formed between the aluminum material and the protruding part, thereby acting to enhance properties of adhesion between the aluminum material and the protruding part. In the carbon-coated aluminum material, these actions allows more effective achievement of the enhancement of the properties of the adhesion between the aluminum material and the carbon-containing layer as the active material layer and more effective achievement of increasing the surface area of the aluminum material.

In this case, it is preferable that at least one part of the carbon-containing particles is adherent to a first surface region of the interposing layer and the protruding part is formed so as to extend outwardly from a second surface region of the interposing layer, the second surface region being different from the first surface region.

It is preferable that the carbon-coated aluminum material, according to the present invention, having any of the above-described features is used in order to configure an electrode structure.

It is preferable that the above-mentioned electrode structure is used in order to configure each of a current collector and an electrode of a capacitor. This allows capacitance properties, internal resistance properties, charge and discharge properties, and a life of a capacitor to be enhanced. As an illustrative example of such a capacitor, an electric double layer capacitor, an aluminum electrolytic capacitor, a functional solid capacitor, and the like can be cited.

In addition, it is preferable that the above-mentioned electrode structure is used in order to configure each of a current collector and an electrode of a battery. This allows capacitance properties, internal resistance properties, charge and discharge properties, and a life of a battery. As an illustrative example of such a battery, a secondary battery such as a lithium ion battery can be cited.

A method, according to the present invention, for manufacturing a carbon-coated aluminum material comprises the following steps.

(A) A resin layer formation step of forming a resin layer on a surface of each carbon-containing particle.

(B) A carbon-containing particle adhesion step of causing the each resin-coated carbon-containing particle to adhere to a surface of an aluminum material, the each resin-coated carbon-containing particle having the resin layer formed thereon at the resin layer formation step.

(C) A heating step of placing the aluminum material and the resin-coated carbon-containing particles in a space including a hydrocarbon-containing substance and heating the aluminum material and the resin-coated carbon-containing particles therein, the heating time being in a range of greater than or equal to 1 hour and less than or equal to 100 hours, wherein an organic layer is formed from the resin layer on a surface of each of the carbon-containing particles by the heating step, the organic layer including at least elements of carbon, hydrogen and oxygen, and the thickness of the organic layer being greater than or equal to 1 nm and less than or equal to 50 nm.

In the manufacturing method according to the present invention, it is not required to provide an interlayer film of carbon in order to secure adhesion properties, as required and described in Patent Document 1, and in addition, it is not necessarily required to conduct a series of steps such as a drying step and a pressure-bonding step after application. Through conducting the simple steps at which the resin-coated carbon-containing particles are caused to adhere to the surface of the aluminum material and thereafter, the aluminum material is placed in the space including the hydrocarbon-containing substance and heated therein, not only the surface of the aluminum material can be coated with an active material layer constituting the carbon-containing layer but also an interposing layer including a carbide of aluminum can be formed between the aluminum material and the active material layer. This allows enhancement of properties of adhesion between the aluminum material and the carbon-containing layer as the active material layer.

In addition, in the manufacturing method according to the present invention, the resin-coated carbon-containing particles each having the surface on which the resin layer has been formed at the resin layer formation step are caused to adhere to the surface of the aluminum material at the carbon-containing particle adhesion step, and thereafter, the aluminum material and the resin-coated carbon-containing particles are placed in the space including the hydrocarbon-containing substance and heated at the heating step, thereby forming the organic layer on the surface of each of the carbon-containing particles. Although at the heating step, the resin layer is heated in an atmosphere including the hydrocarbon-containing substance, the resin layer is not completely oxidized and not completely vanished, becoming the organic layer including elements of at least carbon, hydrogen, and oxygen. This allows presence of the organic layer, which has an appropriate thickness, on the surface of each of the carbon-containing particles.

The organic layer is present on the surface of each of the carbon-containing particles, thereby allowing enhancement of properties of adhesion between the surface of the aluminum material and the surface of each of the plurality of carbon-containing particles included in the carbon-containing layer. In addition to this action, the organic layer is formed on the surface of each of the carbon-containing particles, thereby allowing enhancement of properties of mutual adhesion among the plurality of carbon-containing particles. As a result of interplay of the above-mentioned actions, the properties of the adhesion between the aluminum material and the carbon-containing layer can be further enhanced.

In the method, according to the present invention, for manufacturing the carbon-coated aluminum material, it is preferable that the resin layer formation step comprises a step of mixing the carbon-containing particles and a binder included in the resin layer.

This mixing step is included, thereby enabling the resin layer to be evenly formed on the surface of each of the carbon-containing particles and enabling the organic layer, which is formed by undergoing the carbon-containing particle adhesion step and the heating step, to be evenly formed on the surface of each of the carbon-containing particles. This allows not only further enhancement of properties of the adhesion between the carbon-containing layer and the aluminum material but also the enhancement of the properties of the mutual adhesion among the carbon-containing particles included in the carbon-containing layer.

Furthermore, in the method, according to the present invention, for manufacturing the carbon-coated aluminum material, it is preferable that the heating step is conducted at a temperature in a range of greater than or equal to 450°C and less than 660°C.

EFFECT OF THE INVENTION

As described above, according to the present invention, since the surface of each of the carbon-containing particles has the organic layer, not only the properties of the adhesion between the carbon-containing layer and the surface of the aluminum material can be further enhanced but also the properties of mutual adhesion among the carbon-containing particles included in the carbon-containing layer can be enhanced. In particular, since the properties of the mutual adhesion among the carbon-containing particles are enhanced, the carbon-containing particles are present in a state where the carbon-containing particles are tightly mutually adherent to one another in all directions. As a result, even in a case where a thick carbon-containing layer is formed, it does not occur that the carbon-containing layer is exfoliated in a middle portion thereof.

BRIEF DESCRIPTION OF THE DRAWINGS

Fig. 1 is a schematic view showing a detailed cross-sectional structure of a carbon-coated aluminum material as one embodiment according to the present invention.
Fig. 2 shows a photograph obtained when a surface of a test sample of the carbon-coated aluminum material of Example 2 of the present invention was observed by using a field-emission-type scanning electron microscope (FE-SEM: field emission SEM).
Fig. 3 shows photographs obtained when a cross section of the test sample of the carbon-coated aluminum material of Example 2 of the present invention was observed by using the field-emission-type scanning electron microscope (FE-SEM: field emission SEM).

EXPLANATION OF REFERENCE NUMERALS

1: aluminum foil, 2: carbon-containing layer, 3: interposing layer, 21: protruding part, 22: carbon-containing particles, 23: organic layer.

BEST MODE FOR CARRYING OUT THE INVENTION

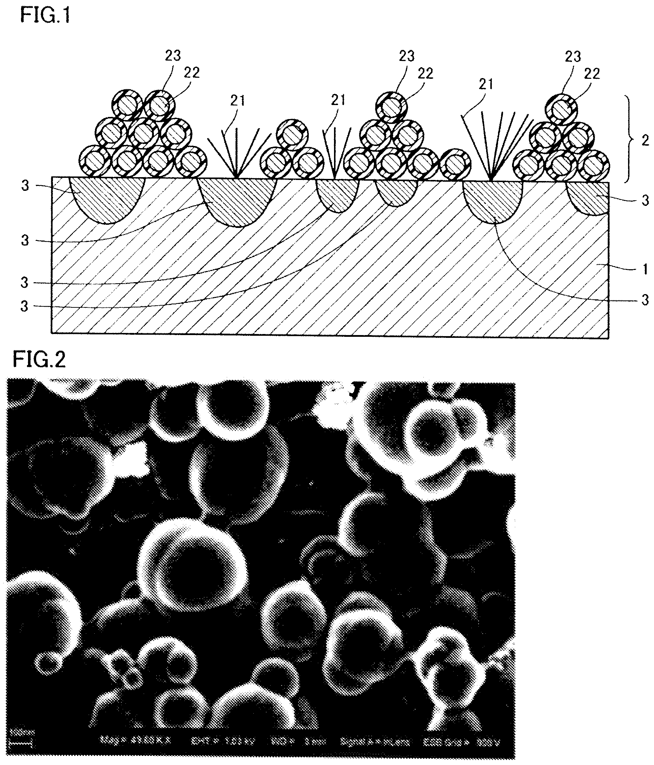

Hereinafter, an embodiment according to the present invention will be described with reference to drawings.
As shown in Fig. 1, in a cross-sectional structure of a carbon-coated aluminum material as one embodiment according to the present invention, a carbon-containing layer 2 is formed on a surface of aluminum foil 1 as one example of an aluminum material. Between the aluminum foil 1 and the carbon-containing layer 2, an interposing layer(s) 3 including an aluminum element and a carbon element is(are) formed. The interposing layer(s) 3 is(are) formed in at least one region of the surface of the aluminum foil 1 and includes a carbide of aluminum, for example, such as A14C3. The carbon-containing layer 2 includes a multitude of carbon-containing particles 22. On a surface of each of the carbon-containing particles 22, an organic layer 23 is formed. A plurality of the carbon-containing particles 22 in close vicinity to the surface of the aluminum foil 1 or the surface(s) of the interposing layer(s) 3 are adherent to the surface of the aluminum foil 1 or the surface(s) of the interposing layer(s) 3 respectively via the organic layers 23 which are formed so as to cover the surfaces of the carbon-containing particles 22. In addition, the plurality of carbon-containing particles 22 deposited on the surface of the aluminum foil 1 or the surface(s) of the interposing layer(s) 3 are mutually adherent to one another via the organic layers 23 formed so as to cover the surfaces of the carbon-containing particles 22.
The carbon-containing layer 2 includes a protruding part(s) 21 formed so as to extend outwardly from the surface(s) of the interposing layer(s) 3. The protruding part(s) 21 includes(include) a carbide of aluminum and extends(extend) outwardly from the surface(s) of the interposing layer(s) 3 so as to have various forms, each of which is of a multitude of fiber-shaped bodies, filament-shaped bodies, plate-shaped bodies, wall-shaped bodies, or scale-shaped bodies. Basal portion(s) of the protruding part(s) 21 is(are) attached onto the surface(s) of the interposing layer(s) 3.
As shown in Fig. 1, in the one embodiment, at least one part of the multitude of carbon-containing particles 22 is adherent onto one part region as a first surface region(s) of the interposing layer(s) 3. The protruding part(s) 21 is(are) adherent to the other part of a region(s) as a second surface region(s) of the interposing layer(s) 3, the second surface region(s) being different from the first surface region(s). One part of the plurality of carbon-containing particles 22, which is in contact with the surface of the aluminum foil 1, may be adherent to surfaces on one part region of the interposing layer(s) 3, and the other part of the plurality of carbon-containing particles 22 may be adherent, not onto the surface(s) of the interposing layer(s) 3, but directly onto the surface of the aluminum foil 1,

where the interposing layer(s) 3 is(are) not formed. Or all of the plurality of carbon-containing particles 22 in contact with the surface of the aluminum foil 1 may be adherent onto a surface(s) on one part region of the interposing layer(s) 3. In either case, the protruding part(s) 21 is(are) formed so as to extend outwardly from the surface region(s) of the interposing layer(s) 3, where the carbon-containing particles 22 are not adherent. Although a plurality of interposing layers 3 are formed on the surface of the aluminum foil 1 in an island-like manner so as to mutually have spacings from one another as shown in Fig. 1 , the plurality of interposing layers 3 may be formed on the surface of the aluminum foil 1 in the island-like manner so as to be mutually adjacent to one another.

In the carbon-coated aluminum material according to the present invention shown in Fig. 1 , the interposing layer(s) 3 formed between the aluminum foil 1 and the carbon-containing layer 2 and including the carbide of the aluminum first acts(act) to enhance properties of adhesion between the surface of the aluminum foil 1 and the carbon-containing layer 2 which is an active material layer allowing a surface area of the aluminum foil 1 to be increased. In addition, the organic layer 23 is present on the surface of each of the carbon-containing particles 22, thereby allowing enhancement of properties of adhesion between the surface of the aluminum foil 1 and the surfaces of the plurality of carbon-containing particles 22 included in the carbon-containing layer 2. In addition to these actions, the organic layer 23 is formed on the surface of each of the carbon-containing particles 22, thereby allowing enhancement of properties of mutual adhesion among the plurality of carbon-containing particles 22. As a result of interplay of the above-mentioned actions, the properties of the adhesion between the aluminum foil 1 and the carbon-containing layer 2 can be further enhanced.

The carbon-containing layer 2 includes the protruding part(s) 21 formed so as to extend outwardly from the surface(s) of the interposing layer(s) 3 and the protruding part(s) 21 includes the carbide of the aluminum, whereby the protruding part(s) 21 acts(act) to increase the surface area of the aluminum foil 1. In addition, the interposing layer(s) 3 including the carbide of the aluminum is(are) formed between the aluminum foil 1 and the protruding part(s) 21, thereby acting to enhance properties of adhesion between the aluminum foil 1 and the protruding parts 21. In the carbon-coated aluminum material, these actions allows more effective achievement of the enhancement of the properties of the adhesion between the aluminum foil 1 and the carbon-containing layer 2 as the active material layer and more effective achievement of increasing the surface area of the aluminum foil 1.

In this case, as shown in Fig. 1, it is preferable that at least one part of the carbon-containing particles 22 is adherent onto the first surface region(s) of the interposing layer(s) 3 and the protruding part(s) 21 is(are) formed so as to extend outwardly from the second surface region(s) different from the first surface region(s) of the interposing layer(s) 3.

It is preferable that the organic layer 23 formed on the surface of each of the carbon-containing particles 22 includes at least elements of carbon, hydrogen, and oxygen.

The thickness of this organic layer 23 is less than or equal to 50 nm, and further, it is more preferable that the thickness thereof is less than or equal to 30 nm. In order to effectively exhibit the above-mentioned actions, the thickness of the organic layer 23 is greater than or equal to 1 nm.

The organic layer 23 has the thickness which is within the above-mentioned range, thereby allowing the carbon-containing layer 2 including the plurality of carbon-containing particles 22 to maintain an electrical conductivity and enabling the properties of the adhesion between the aluminum foil 1 and the carbon-containing layer 2 to be enhanced.

In the one embodiment according to the present invention, the aluminum material (the aluminum foil 1 as one example in the above-described embodiment), as a base material, on which the carbon-containing layer 2 is formed is not particularly limited, and pure aluminum or an aluminum alloy can be used. It is preferable that such an aluminum material has an aluminum purity of greater than or equal to 98% by mass, as a value measured in accordance with a method described in "JIS H2111". Included as the aluminum material used in the present invention is an aluminum alloy to which as composition, at least one kind of alloy elements of lead (Pb), silicon (Si), iron (Fe), copper (Cu), manganese (Mn), magnesium (Mg), chromium (Cr), zinc (Zn), titanium (Ti), vanadium (V), gallium (Ga), nickel (Ni), and boron (B) is added with a content which is within a required range; or aluminum in which a content of the one kind of the above-mentioned unavoidable impurity elements is limited. Although a thickness of the aluminum material is not particularly limited, it is preferable that in a case where the aluminum material is foil, the thickness is greater than or equal to 5 $\mu$m and less than or equal to 200 $\mu$m; and in a case where the aluminum material is a plate, the thickness is within a range of exceeding 200 $\mu$m and less than or equal to 3 mm.

As the above-mentioned aluminum material, an aluminum material which can be manufactured by employing a heretofore known method can be used. For example, molten aluminum or a molten aluminum alloy, which has the above-mentioned predetermined composition, is prepared, the molten aluminum or the molten aluminum alloy is cast to obtain an ingot thereof, and the obtained ingot is appropriately subjected to a homogenizing process. Thereafter, this ingot is subjected to hot rolling and cold rolling, thereby allowing the aluminum material to be obtained. In the midstream of the above-mentioned cold rolling process, process annealing at a temperature in a range of greater than or equal to 150°C and less than or equal to 400°C may be conducted.

It is preferable that the carbon-coated aluminum material according to the present invention, which has any of the above-described features, is used in order to configure an electrode structure.

It is preferable that the above-mentioned electrode structure is used in order to configure each of a current collector and an electrode of a capacitor. This allows capacitance properties, internal resistance properties, charge and discharge properties, and a life of a capacitor to be enhanced. As an illustrative example of such a capacitor, an electric double layer capacitor, an aluminum electrolytic capacitor, a functional solid capacitor, and the like can be cited.

In addition, it is preferable that the above-mentioned electrode structure is used in order to configure each of a current collector and an electrode of a battery. This allows capacitance properties, internal resistance properties, charge and discharge properties, and a life of a battery. As an illustrative example of such a battery, a secondary battery such as a lithium ion battery can be cited.

In one embodiment of a method for manufacturing the carbon-coated aluminum material according to the present invention, a resin layer is first formed on a surface of each of the carbon-containing particles 22 (resin layer formation step). Next, resin-coated carbon-containing particles each having the surface on which the resin layer has been formed by the resin layer formation step are caused to adhere to a surface of the aluminum foil 1 (carbon-containing particle adhesion step). Thereafter, the aluminum foil 1 and the resin-coated carbon-containing particles are placed in a space including a hydrocarbon-containing substance and heated therein (heating step). Through this heating, as shown in Fig. 1, the carbon-containing layer 2 is formed on the surface of the aluminum foil 1 and the organic layer 23 is formed on the surface of each of the carbon-containing particles 22 included in the carbon-containing layer 2.

In the manufacturing method according to the present invention, it is not required to provide an interlayer film of carbon in order to secure adhesion properties, as required and described in Patent Document 1, and in addition, it is not necessarily required to conduct a series of steps such as a drying step and a pressure-bonding step after application. Through conducting the simple steps at which the resin-coated carbon-containing particles are caused to adhere to the surface of the aluminum foil 1 and thereafter, the aluminum foil 1 is placed in the space including the hydrocarbon-containing substance and heated, not only the surface of the aluminum foil 1 can be coated with an active material layer constituting the carbon-containing layer 2 but also an interposing layer(s) 3 including a carbide of aluminum can be formed between the aluminum foil 1 and the active material layer. This allows, as shown in Fig. 1, enhancement of properties of adhesion between the aluminum foil 1 and the carbon-containing layer 2 as the active material layer.

In addition, in the manufacturing method according to the present invention, the resin-coated carbon-containing particles each having the surface on which the resin layer has been formed at the resin layer formation step are caused to adhere to the surface of the aluminum foil 1 at the carbon-containing particle adhesion step, and thereafter, the aluminum foil 1 and the resin-coated carbon-containing particles are placed in the space including the hydrocarbon-containing substance and heated therein at the heating step, thereby forming the organic layer 23 on the surface of each of the carbon-containing particles 22 as shown in Fig. 1 . Although at the heating step, the resin layer is heated in an atmosphere including the hydrocarbon-containing substance, the resin layer is not completely oxidized and not completely vanished, becoming the organic layer 23 including elements of at least carbon, hydrogen, and oxygen. This allows presence of the organic layer 23, which has an appropriate thickness, on the surface of each of the carbon-containing particles 22.

The organic layer 23 is present on the surface of each of the carbon-containing particles 22, thereby allowing enhancement of properties of adhesion between the surface of the aluminum foil 1 and the surface of each of the plurality of carbon-containing particles 22 included in the carbon-containing layer 2. In addition to this action, the organic layer 23 is formed on the surface of each of the carbon-containing particles 22, thereby allowing enhancement of properties of mutual adhesion among the plurality of carbon-containing particles 22. As a result of interplay of the above-mentioned actions, the properties of the adhesion between the aluminum foil 1 and the carbon-containing layer 2 can be further enhanced.

In the method, according to the present invention, for manufacturing the carbon-coated aluminum material, it is preferable that the resin layer formation step includes a step of mixing the carbon-containing particles 22 and a binder included in the resin layer (mixing step).

This mixing step is included, thereby enabling the resin layer to be evenly formed on the surface of each of the carbon-containing particles 22 and enabling the organic layer 23, which is formed by undergoing the carbon-containing particle adhesion step and the heating step, to be evenly formed on the surface of each of the carbon-containing particles 22. This allows not only further enhancement of properties of the adhesion between the carbon-containing layer 2 and the aluminum foil 1 but also the enhancement of the properties of the mutual adhesion among the carbon-containing particles 22 included in the carbon-containing layer 2.

When the mixing step is conducted, a solvent may be appropriately added, and thereby, an efficiency of mixing of the carbon-containing particles 22 and the binder may be improved. Furthermore, a mixing method and a time period during which the mixing is conducted are not particularly limited, provided that the resin layer is evenly formed. However, in a case where the mixing is conducted with the solvent added, it is desirable that an added amount of the solvent is small. If an excessive amount of the solvent is added, a thickness of the resin layer formed on the surface of each of the carbon-containing particles 22 is made extremely thin or the resin layer is hardly formed, whereby it is likely that the organic layer 23 is not formed at the subsequent heating step. It is preferable that an added amount of the solvent is less than or equal to 20% by mass per an added amount of the binder.

In addition, in order to promote secure formation of the resin layer on the surface of each of the carbon-containing particles 22, it is more preferable that after conducting the mixing step, a drying step of drying the surface of each of the carbon-containing particles 22 is conducted.

Although a kind of the carbon-containing particles 22 as the active material is not particularly limited, for example, any of activated carbon fiber, activated carbon cloth, activated carbon felt, activated carbon powder, India ink, carbon black, graphite, or the like may be used. In addition, as the carbon-containing particles 22, a carbon compound such as a silicon carbide can also be favorably used.

Although the binder used at the resin layer formation step is not particularly limited, for example, an ethylene based binder, an epoxy based binder, a vinyl chloride based binder, an acryl based binder, a styrene based binder, a urea based binder, a melamine based binder, a phenol based binder, a fluorine based binder, a urethane based binder, or the like can be cited. It is preferable that the binder used at the resin layer formation step and the binder used at the subsequent carbon-containing particle adhesion step are different from each other. For example, in a case where the binder used at the carbon-containing particle adhesion step is a binder which is dissolved in a water-soluble solvent, it is preferable that the binder used at the resin layer formation step is an oil-soluble binder. However, a combination which is converse to the above-mentioned combination is not excluded.

Although the solvent appropriately used at the resin layer formation step is not particularly limited, it is preferable that the solvent appropriately used at the resin layer formation step is a good solvent of the binder (binder-soluble solvent). For example, in a case where as the binder, an oil-soluble binder is used, methyl isobutyl ketone, toluene, methyl ethyl ketone, or the like can be cited.

In a method in which the resin-coated carbon-containing particles each having the resin layer formed thereon at the resin layer formation step are caused to adhere to the surface of the aluminum foil 1 at the above-described carbon-containing particle adhesion step, the carbon-containing substance including the above-mentioned resin-coated carbon-containing particles is rendered in a slurry state, a liquid state, a solid state, or the like by using a binder, a solvent, water, or the like, and the resultant is caused to adhere onto the surface of the aluminum foil 1 through applying, dipping, thermocompression bonding, or the like. After the above-mentioned carbon-containing substance has been caused to adhere onto the surface of the aluminum foil 1 and before the heating processing is conducted, drying at a temperature in a range of greater than or equal to 20°C and less than or equal to 300°C may be conducted.

In a case where in the manufacturing method according to the present invention, the binder is used in order to cause the resin-coated carbon-containing particles to adhere to the surface of the aluminum foil 1, a binder which is easily volatilized or pyrolyzed through heating as compared with the binder used at the resin layer formation step is preferable. Favorably used as this binder is a synthetic resin or wax selected from a carboxy-modified polyolefin resin, a vinyl acetate resin, a vinyl chloride resin, a vinyl chloride-vinyl acetate copolymer resin, a vinyl alcohol resin, a polyvinyl fluoride, an acrylic resin, a polyester resin, a urethane resin, an epoxy resin, a urea resin, a phenol resin, an acrylonitrile resin, a nitrocellulose resin, paraffin wax, polyethylene wax, and the like; or a natural resin or wax selected from tar, glue, japan, a pine resin, beeswax, and the like. In particular, in a case where the binder used at the resin layer formation step is an oil-soluble binder, it is preferable that the binder at the carbon-containing particle adhesion step is a binder which is dissolved in a water-soluble solvent. However, a combination which is converse to the above-mentioned combination is not excluded, and using binders which are the same as each other is also not excluded. As these binders, there are a binder which is volatilized upon the heating and a binder which remains as a carbon precursor in the carbon-containing layer through thermal decomposition, depending on a molecular weight and a resin kind. The binder may be diluted by using a solvent or the like and thereby, a viscosity may be adjusted.

Although the solvent used at the carbon-containing particle adhesion step is not particularly limited, the solvent used at the carbon-containing particle adhesion step varies depending on the binder used at the carbon-containing particle adhesion step. It is preferable that a poor solvent of the binder used at the resin layer formation step (solvent which hardly dissolves the binder used at the resin layer formation step) is used. The reason for this is that if a good solvent of the binder used at the resin layer formation step is used at the carbon-containing particle adhesion step, it is likely that the resin layer formed on the surface of each of the carbon-containing particles 22 is dissolved by the good solvent at the mixing step in the carbon-containing particle adhesion step.

In addition, in the carbon-coated aluminum material according to the present invention, it is only required to form the carbon-containing layer 2 on at least either one of the surfaces of the aluminum foil 1, and it is preferable that a thickness thereof is within a range of greater than or equal to 0.01 μm and less than or equal to 10 mm.

In the one embodiment of the method for manufacturing the carbon-coated aluminum material according to the present invention, a kind of the used hydrocarbon-containing substance is not particularly limited. Cited as the kind of the hydrocarbon-containing substance is, for example, a paraffinic hydrocarbon such as methane, ethane, propane, n-butane, isobutene, and pentane; an olefinic hydrocarbon such as ethylene, propylene, butene, and butadiene; an acetylenic hydrocarbon such as acetylene; or a derivative of each of these hydrocarbons. Among these hydrocarbons, the paraffinic hydrocarbon such as methane, ethane, and propane are preferable since these hydrocarbons become gaseous at the step of heating the aluminum material. Further preferable is any one kind of the hydrocarbons of methane, ethane, and propane. The most preferable hydrocarbon is methane.

In addition, in the manufacturing method according to the present invention, the hydrocarbon-containing substance which is in any state of a liquid state, a gaseous state, and the like may be used. It is only required for the hydrocarbon-containing substance to be present in a space where the aluminum material is present, and the hydrocarbon-containing substance may be introduced in the space where the aluminum material is placed, by employing any method. For example, in a case where the hydrocarbon-containing substance is in the gaseous state (methane, ethane, propane, etc.), an enclosed space where the heating processing of the aluminum material is conducted may be filled with the hydrocarbon-containing substance solely or together with inert gas. In addition, in a case where the hydrocarbon-containing substance is in the liquid state, the enclosed space may be filled with the hydrocarbon-containing substance solely or together with inert gas such that the hydrocarbon-containing substance is gasified in the enclosed space.

At the step of heating the aluminum material, a pressure of a heating atmosphere is not particularly limited, and the pressure may be a normal pressure, a reduced pressure, or an increased pressure. In addition, adjustment of the pressure may be conducted while a given heating temperature is being maintained, while a temperature is being raised so as to reach a given heating temperature, or while a temperature is being reduced so as to lower from a given heating temperature.

Although a mass ratio of the hydrocarbon-containing substance introduced in the space where the aluminum material is heated is not particularly limited, it is preferable that the mass ratio is ordinarily in a range of greater than or equal to 0.1 part by mass and less than or equal to 50 parts by mass in terms of carbon per 100 parts by mass of aluminum, and in particular, it is preferable that the mass ratio is in a range of greater than or equal to 0.5 part by mass and less than or equal to 30 parts by mass.

At the step of heating the aluminum material, a heating temperature can be appropriately set in accordance with composition or the like of the aluminum material to be heated. It is preferable that the heating is conducted ordinarily at a temperature in a range of greater than or equal to 450°C and less than 660°C, and it is more preferable that the heating is conducted greater than or equal to 530°C and less than or equal to 620°C. However, in the manufacturing method according to the present invention, heating the aluminum material at a temperature less than 450°C is not excluded, and it is only required to heat the aluminum material at a temperature exceeding at least 300°C.

A heating time is in a range of greater than or equal to 1 hour and less than or equal to 100 hours in general.

In a case where the heating temperature is greater than or equal to 400 °C, it is preferable that a concentration of oxygen in the heating atmosphere is less than or equal to 1.0% by volume. If the heating temperature is greater than or equal to 400°C and the concentration of oxygen in the heating atmosphere exceeds 1.0% by volume, it is likely that a thermally-oxidized film of a surface of the aluminum material overgrows and a surface resistance value of the aluminum material is increased.

In addition, before the heating processing, the surface of the aluminum material may be roughened. A roughing method is not particularly limited, and a heretofore known technique such as cleaning, etching, and blasting can be used.

EXAMPLES

In accordance with the following examples 1 through 6 and comparative examples 1 through 2, carbon-coated aluminum materials, in each of which aluminum foil 1 was used as a base material, were prepared.

(Examples 1 through 6)

Two parts by mass of carbon black particles, as carbon-containing particles 22, having an average particle size of 300 nm were mixed with one part by mass of each of the binders shown in "Binders used at a resin layer formation step" of Table 1, 20% by mass of toluene per each of the binders was added therein, and the resultant was sufficiently kneaded by a kneader, thereby forming a resin layer on a surface of each of the carbon black particles (resin layer formation step).

In each of Examples 1 through 3, the kneaded substance including the carbon black particles each having the surface on which the resin layer had been formed was evenly dispersed in an isopropyl alcohol solution shown in "Solvents and the like used at a carbon-containing particle adhesion step" of Table 1 by using a disperser, thereby obtaining a coating liquid including 20% by mass of a solid content of the carbon black particles as a coating liquid used at the carbon-containing particle adhesion step.

In each of Examples 4 through 6, the kneaded substance including the carbon black particles each having the surface on which the resin layer had been formed was mixed with one part by mass of each binder shown in "Solvents and the like used at a carbon-containing particle adhesion step" of Table 1 and dispersed in each solvent and water shown in "Solvents and the like used at a carbon-containing particle adhesion step" of Table 1 by using a disperser, thereby obtaining a coating liquid including 20% by mass of a solid content of the carbon black particles as a coating liquid used at the carbon-containing particle adhesion step. In Examples 5 and 6, a solvent volume ratio of a mixed solvent of toluene and methyl ethyl ketone, shown in Table 1, as solvents used at the carbon-containing particle adhesion step was toluene : methyl ethyl ketone = 2 : 1.

Each of these coating liquids was applied to both surfaces of aluminum foil having a thickness of 50 $\mu$m and a purity of 99.3% by mass, thereby forming a carbon-black-particle-containing layer, and the resultant was dried at a temperature of 150°C for 30 seconds (carbon-containing particle adhesion step). A thickness of the carbon-black-particle-containing layer after being dried on one of the surfaces was 1 through 3 $\mu$m. Thereafter, the aluminum foil having the both surfaces on which the carbon-black-particle-containing layers had been formed was held in a methane gas atmosphere at a temperature of 550°C for 10 hours (heating step), thereby preparing the carbon-coated aluminum material according to the present invention.

A cross section of the carbon-coated aluminum material according to the present invention in each of Examples 1 through 6 was observed, and then, it was confirmed that an organic layer 23 had been formed on the surface of each of the carbon black particles as the carbon-containing particles 22.

The observation of the cross section was conducted by using a high-resolution field-emission-type scanning electron microscope (FE-SEM: field emission SEM) (Ultra55 manufactured by Carl Zeiss).

As one example, a photograph obtained when a surface of a test sample of the carbon-coated aluminum material of Example 2 was observed by using the field-emission-type scanning electron microscope is shown in Fig. 2.

As shown in Fig. 2, in the carbon-coated aluminum material, a state in which the carbon black particles appearing to be spherical have mutually adhered to and been attached to one another is seen well.

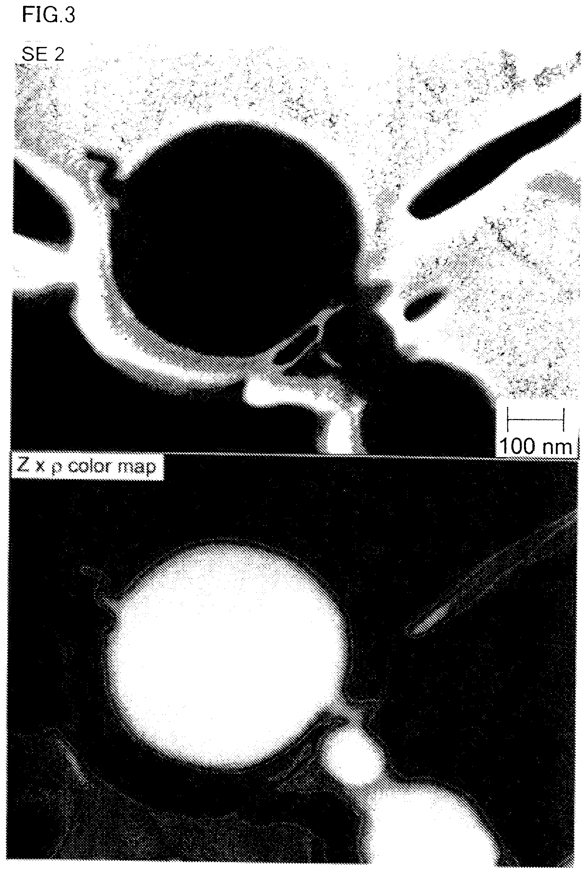

Photographs obtained when the cross section of the test sample of the carbon-coated aluminum material of Example 2 was observed by using the field-emission-type scanning electron microscope is shown in Fig. 3. An upper photograph in Fig. 3 is a photographic image observed as a backscattered electron image and a lower photograph is obtained by color-mapping the photographic image observed as the backscattered electron image such that a boundary between each of the carbon black particles as carbon-containing particles 22 and the organic layer 23 formed on the surface of each of the carbon black particles can be seen. In the lower photograph in Fig. 3, presence of the organic layer 23 is clearly seen.

(Comparative Example 1)

Two parts by mass of carbon black particles, as particles corresponding to the carbon-containing particles 22, having an average particle size of 300 nm were mixed with one part by mass of an acryl based binder shown in "Solvents and the like used at a carbon-containing particle adhesion step" of Table 1, and the resultant was dispersed in a mixed solution of toluene and methyl ethyl ketone (toluene : methyl ethyl ketone = 2 : 1 as a solvent volume ratio of the mixed solvent of toluene and methyl ethyl ketone), thereby obtaining a coating liquid including 20% by mass of a solid content of the carbon black particles as a coating liquid used at a step corresponding to the carbon-containing particle adhesion step. This coating liquids was applied to both surfaces of aluminum foil having a thickness of 50 $\mu$m and a purity of 99.3% by mass, and the resultant was dried at a temperature of 150 °C for 30 seconds (step corresponding to the carbon-containing particle adhesion step). A thickness of the carbon-black-particle-containing layer after being dried on one of the surfaces was 1 $\mu$m. Thereafter, the aluminum foil having the both surfaces on which the carbon-black-particle-containing layers had been formed was held in a methane gas atmosphere at a temperature of 550°C for 10 hours (step corresponding to the heating step), thereby preparing the carbon-coated aluminum material. A manufacturing method in the present comparative example corresponds to a method in which the resin layer formation step in the manufacturing method according to the present invention is not included.

A cross section of the obtained carbon-coated aluminum material was observed by using the field-emission-type scanning electron microscope, and then, formation of an organic layer 23 on the surface of each of the carbon black particles was not confirmed.

(Comparative Example 2)

Two parts by mass of carbon black particles, as particles corresponding to the carbon-containing particles 22, having an average particle size of 300 nm were mixed with one part by mass of a vinyl chloride based binder shown in "Solvents and the like used at a carbon-containing particle adhesion step" of Table 1, and the resultant was dispersed in a mixed solution of toluene and methyl ethyl ketone, thereby obtaining a coating liquid including 20% by mass of a solid content of the carbon black particles as a coating liquid used at a step corresponding to the carbon-containing particle adhesion step. This coating liquids was applied to both surfaces of aluminum foil having a thickness of 50 $\mu$m and a purity of 99.3% by mass, and the resultant was dried at a temperature of 150°C for 30 seconds (step corresponding to the carbon-containing particle adhesion step). A thickness of the carbon-black-particle-containing layer after being dried on one of the surfaces was 3 $\mu$m. Thereafter, the aluminum foil having the both surfaces on which the carbon-black-particle-containing layers were formed was held in a methane gas atmosphere at a temperature of 550°C for 10 hours (step corresponding to the heating step), thereby preparing the carbon-coated aluminum material. A manufacturing method in the present comparative example corresponds to a method in which the resin layer formation step in the manufacturing method according to the present invention is not included.

A cross section of the obtained carbon-coated aluminum material was observed by using the field-emission-type scanning electron microscope, and then, formation of an organic layer 23 on the surface of each of the carbon black particles was not confirmed.

[Evaluation]

A result of a temporal reliability test (adhesion properties and capacitance properties of the carbon-containing particles 22) conducted for the aluminum foil 1 and the carbon-containing layer 2 in each of the carbon-coated aluminum materials obtained in Examples 1 through 6 and Comparative Examples 1 and 2 is shown in Table 1. Conditions of the evaluation are as follows.

[Initial Capacitance]

An initial capacitance is a value of a capacitance measured before the later-described temporal test [temporal reliability test: capacitance properties], and preparation of test samples and measurement of capacitances were conducted based on a method for measuring a capacitance of cathode foil for an electrolytic capacitor, the method defined by EIAJ standards.

[Temporal Reliability Test: Adhesion Properties of Carbon-containing Particles]

First, each of the carbon-coated aluminum materials prepared as the test samples in Examples 1 through 6 and Comparative Examples 1 and 2 was held for 6 weeks in a constant temperature and humidity bath in which a temperature was maintained at 85 °C and a relative humidity was maintained at 85%.

Based on "comparison values of adhesion properties of the carbon-containing particles" before and after the temporal test, the evaluation was made.

The "comparison values of adhesion properties of the carbon-containing particles" are obtained by using the below equation.

$$\text{“A comparison value of adhesion properties of the carbon-containing particles”} = (\text{A weight of a test sample after the temporal test} - \text{A weight of a test sample including only an aluminum material used as a base material})$$
$$\div (\text{A weight of a test sample before the temporal test} - \text{A weight of a test sample including only an aluminum material used as a base material}) \times 100[\%].$$

In this equation, in a case where exfoliation of the carbon-containing particles 22 is not recognized at all before and after the temporal test, the above-mentioned value is 100.

In a case where the above-mentioned value exceeded 95, the evaluation was "being acceptable" (being excellent in the adhesion properties).

When used in the test, the test samples were cut such that each of the prepared carbon-coated aluminum materials had a width of 10 mm and a length of 100 mm and was of a rectangular shape.

[Temporal Reliability Test: Capacitance Properties]

First, each of the test samples was held for 6 weeks in a constant temperature and humidity bath in which a temperature was maintained at 85°C and a relative humidity was maintained at 85%.

Based on "capacitance comparison values" before and after the temporal test, the evaluation was made.

The "capacitance comparison values" are obtained by using the below equation.

$$\text{"A capacitance comparison value"} = (\text{A capacitance after the temporal test}) \div (\text{A capacitance before the temporal test}) \times 100[\%].$$

In this equation, in a case where there is no difference between the capacitance properties before and after the temporal test, the above-mentioned value is 100.

In a case where the above-mentioned value exceeds 90, the evaluation was "being acceptable" (a change in the capacitance is small).

Further, preparation of the test samples and measurement of capacitances were conducted based on the method for measuring a capacitance of cathode foil for an electrolytic capacitor, the method defined by EIAJ standards.

A result obtained as described above is shown in Table 1.

[Table 1]

| | Resin layer formation step | Binders used at a resin layer formation step | Solvents and the like used at a carbon-containing particle adhesion step | Carbon-containing layer thickness ($\mu$m/one surface) | Initial capacitance ($\mu$F/cm$^2$) | Temporal reliability test (%) | |
|---|---|---|---|---|---|---|---|
| | | | | | | Adhesion properties of carbon-containing particles | Capacitance properties |
| Example 1 | Conducted. | Epoxy based binder (Note 1) | Isopropyl alcohol | 3 | 360 | 97 | 95 |
| Example 2 | Conducted. | Vinyl chloride based binder (Note 2) | Isopropyl alcohol | 3 | 380 | 95 | 95 |
| Example 3 | Conducted. | Acryl based binder (Note 3) | Isopropyl alcohol | 1 | 120 | 99 | 98 |
| Example 4 | Conducted. | Vinyl chloride based binder (Note 2) | Polyvinyl alcohol based binder +Water | 3 | 350 | 99 | 97 |
| Example 5 | Conducted | Acryl based Binder (Note 3) | Acryl based binder +Toluene +Methyl ethyl ketone | 3 | 190 | 98 | 98 |
| Example 6 | Conducted | Vinyl chloride based binder (Note 2) | Vinyl chloride based binder +Toluene + Methyl ethyl ketone | 3 | 200 | 99 | 96 |
| Comparison Example 1 | Not conducted. | - | Acryl based binder +Toluene +Methyl ethyl ketone | 1 | 110 | 92 | 91 |
| Comparison Example 2 | Not conducted. | - | Vinyl chloride based binder +Toluene +Methyl ethyl ketone | 3 | 340 | 80 | 78 |
| (Note 1) EPICOAT manufactured by Japan Epoxy Resins Co.,Ltd.<br>(Note 2) ACRYSET manufactured by NIPPON SHOKUBAI CO., LTD.<br>(Note 3) SOLBIN manufactured by Nissin Chemical Industry Co.,Ltd. | | | | | | | |

EP 2 383 371 B1

13

As is seen from the result shown in Table 1, each of the carbon-coated aluminum materials in Examples 1 through 6 showed more excellent properties with fewer changes in both the adhesion properties and the capacitances before and after the temporal reliability test, than the carbon-coated aluminum materials in Comparative Examples 1 and 2.

As the reason for this, it is inferred that in the Examples 1 through 6, the organic layer 23 is formed on the surface of each of the carbon black particles (carbon-containing particles 22) and the presence of this organic layer 23 enhances the properties of the mutual adhesion of the carbon-containing particles 22, thereby causing no exfoliation of the carbon-containing layer 2 even after the temporal reliability test and exhibiting excellent properties.

Regarding Examples 4 through 6, Example 4 in which the binder used at the resin layer formation step and the binder used at the carbon-containing particle adhesion step were different from each other had a large initial capacitance.

The reason for this is inferred as follows. In Example 4, it is considered that the binder used at the carbon-containing particle adhesion step is completely volatilized or pyrolyzed at the heating step whereas in Examples 5 and 6, it is considered that since the binder used at the carbon-containing particle adhesion step and the binder at the resin layer formation step are the same as each other, the binder used at the carbon-containing particle adhesion step is poorly volatilized or pyrolyzed at the heating step and remains. Therefore, in Examples 5 and 6, interstices among the carbon black particles are filled up by the remaining binder, as compared with a case of Example 4. As a result, it is inferred in Example 4 that a surface area of the aluminum is increased as compared with those in Examples 5 and 6 and therefore, the initial capacitance is increased.

INDUSTRIAL APPLICABILITY

By using a carbon-coated aluminum material according to the present invention, an electrode structure such as an electrode and a current collector of a capacitor such as an electric double layer capacitor, an aluminum electrolytic capacitor, and a functional solid capacitor and such as an electrode and a current collector of a secondary battery such as a lithium ion battery is configured, thereby allowing enhancement of capacitance properties, internal resistance properties, charge and discharge properties, and a life of a capacitor and a battery.

**Claims**

1. A carbon-coated aluminum material, comprising:

   an aluminum material;
   a carbon-containing layer formed on a surface of the aluminum material; and
   an interposing layer formed between the aluminum material and the carbon-containing layer and on at least one region of the surface of the aluminum material, the interposing layer including a carbide of aluminum, wherein
   the carbon-containing layer includes a plurality of carbon-containing particles, and
   an organic layer is formed on a surface of each of the carbon-containing particles, the organic layer including at least elements of carbon, hydrogen and oxygen, and
   the thickness of the organic layer being greater than or equal to 1 nm and less than or equal to 50 nm.

2. The carbon-coated aluminum material according to claim 1, wherein the carbon-containing layer includes a protruding part formed so as to extend outwardly from a surface of the interposing layer, and the protruding part includes a carbide of aluminum.

3. The carbon-coated aluminum material according to claim 2, wherein at least one part of the carbon-containing particles is adherent to a first surface region of the interposing layer and the protruding part is formed so as to extend outwardly from a second surface region of the interposing layer, the second surface region being different from the first surface region.

4. The carbon-coated aluminum material according to claim 1, wherein the carbon-coated aluminum material is used in order to configure an electrode structure.

5. The carbon-coated aluminum material according to claim 4, wherein the electrode structure is each of a current collector and an electrode of a capacitor.

6. The carbon-coated aluminum material according to claim 4, wherein the electrode structure is each of a current collector and an electrode of a battery.

7. A method for manufacturing a carbon-coated aluminum material, comprising the steps of:

a resin layer formation step of forming a resin layer on a surface of each carbon-containing particle;
a carbon-containing particle adhesion step of causing each resin-coated carbon-containing particle to adhere to a surface of an aluminum material, the each resin-coated carbon-containing particle having the resin layer formed thereon at the resin layer formation step; and
a heating step of placing the aluminum material and the resin-coated carbon-containing particles in a space including a hydrocarbon-containing substance and heating the aluminum material and the resin-coated carbon-containing particles therein,
wherein an organic layer is formed from the resin layer on a surface of each of the carbon-containing particles by the heating step, the organic layer including at least elements of carbon, hydrogen and oxygen, and the thickness of the organic layer being greater than or equal to 1 nm and less than or equal to 50 nm.

8. The method for manufacturing the carbon-coated aluminum material according to claim 7, wherein the resin layer formation step comprises a step of mixing the carbon-containing particles and a binder included in the resin layer.

9. The method for manufacturing a carbon-coated aluminum material according to claim 7, wherein the heating step is conducted at a temperature in a range of greater than or equal to 450°C and less than 660°C.

## Patentansprüche

1. Kohlenstoffbeschichtetes Aluminiummaterial, umfassend:

ein Aluminiummaterial;
eine kohlenstoffhaltige Schicht, die auf einer Oberfläche des Aluminiummaterials gebildet ist; und
eine Zwischenschicht, die zwischen dem Aluminiummaterial und der kohlenstoffhaltigen Schicht und auf mindestens einem Bereich der Oberfläche des Aluminiummaterials gebildet ist, wobei die Zwischenschicht ein Aluminiumcarbid enthält,
worin:

die kohlenstoffhaltige Schicht eine Vielzahl kohlenstoffhaltiger Partikel enthält,
auf einer Oberfläche jedes der kohlenstoffhaltigen Partikel eine organische Schicht gebildet wird, wobei die organische Schicht mindestens Elemente ausgewählt aus Kohlenstoff, Wasserstoff und Sauerstoff enthält, und
die Dicke der organischen Schicht größer als oder gleich 1 nm und kleiner als oder gleich 50 nm ist.

2. Kohlenstoffbeschichtetes Aluminiummaterial nach Anspruch 1, wobei die kohlenstoffhaltige Schicht einen vorstehenden Teil aufweist, der so ausgebildet ist, dass er sich von einer Oberfläche der Zwischenschicht nach außen erstreckt, und der vorstehende Teil ein Aluminiumcarbid umfasst.

3. Kohlenstoffbeschichtetes Aluminiummaterial nach Anspruch 2, wobei mindestens ein Teil der kohlenstoffhaltigen Partikel an einem ersten Oberflächenbereich der Zwischenschicht haftet und der vorstehende Teil so ausgebildet ist, dass er sich von einem zweiten Oberflächenbereich der Zwischenschicht nach außen erstreckt, wobei sich der zweite Oberflächenbereich vom ersten Oberflächenbereich unterscheidet.

4. Kohlenstoffbeschichtetes Aluminiummaterial nach Anspruch 1, wobei das mit kohlenstoffbeschichtete Aluminiummaterial verwendet wird, um eine Elektrodenstruktur zu bilden.

5. Kohlenstoffbeschichtetes Aluminiummaterial nach Anspruch 4, wobei die Elektrodenstruktur jeweils jene eines Stromkollektors und einer Kondensatorelektrode ist.

6. Kohlenstoffbeschichtetes Aluminiummaterial nach Anspruch 4, wobei die Elektrodenstruktur jeweils jene eines Stromkollektors und einer Batterieelektrode ist.

7. Verfahren zur Herstellung eines kohlenstoffbeschichteten Aluminiummaterials, umfassend die folgenden Schritte:

einen Harzschichtbildungsschritt zum Bilden einer Harzschicht auf einer Oberfläche jedes kohlenstoffhaltigen Partikels;

einen Schritt zum Anhaften von kohlenstoffhaltigen Partikeln, bei dem die Anhaftung jedes harzbeschichteten kohlenstoffhaltigen Partikels an einer Oberfläche eines Aluminiummaterials bewirkt wird, wobei auf jedem harzbeschichteten kohlenstoffhaltigen Partikel bei dem Harzschichtbildungsschritt eine Harzschicht gebildet wird; und

einen Erhitzungsschritt, wobei das Aluminiummaterial und die harzbeschichteten kohlenstoffhaltigen Partikel in eine Umgebung gebracht werden, die eine kohlenwasserstoffhaltige Substanz enthält, und darin erwärmt werden,

wobei durch den Erhitzungsschritt aus der Harzschicht auf einer Oberfläche jedes der kohlenstoffhaltigen Partikel eine organische Schicht gebildet wird, wobei die organische Schicht mindestens Elemente ausgewählt aus Kohlenstoff, Wasserstoff und Sauerstoff enthält, und die Dicke der organischen Schicht größer als oder gleich 1 nm und kleiner als oder gleich 50 nm ist.

8. Verfahren zur Herstellung des kohlenstoffbeschichteten Aluminiummaterials nach Anspruch 7, wobei der Harzschichtbildungsschritt einen Schritt des Vermischens der kohlenstoffhaltigen Teilchen und eines in der Harzschicht enthaltenen Bindemittels umfasst.

9. Verfahren zur Herstellung eines kohlenstoffbeschichteten Aluminiummaterials nach Anspruch 7, wobei der Erwärmungsschritt bei einer Temperatur in einem Bereich von mehr als oder gleich 450°C und weniger als 660°C durchgeführt wird.

## Revendications

1. Matériau d'aluminium revêtu de carbone, comprenant :

un matériau d'aluminium ;
une couche contenant du carbone formée sur une surface du matériau d'aluminium ; et
une couche intermédiaire formée entre le matériau d'aluminium et la couche contenant du carbone et sur au moins une région de la surface du matériau d'aluminium, la couche intermédiaire incluant un carbure d'aluminium,
dans lequel
la couche contenant du carbone inclut une pluralité de particules contenant du carbone, et
une couche organique est formée sur une surface de chacune des particules contenant du carbone, la couche organique incluant au moins les éléments carbone, hydrogène et oxygène, et
l'épaisseur de la couche organique étant supérieure ou égale à 1 nm et inférieure ou égale à 50 nm.

2. Matériau d'aluminium revêtu de carbone selon la revendication 1, dans lequel la couche contenant du carbone inclut une partie saillante formée de façon à s'étendre en direction de l'extérieur à partir d'une surface de la couche intermédiaire, et la partie saillante inclut un carbure d'aluminium.

3. Matériau d'aluminium revêtu de carbone selon la revendication 2, dans lequel au moins une partie des particules contenant du carbone adhère à une première région de surface de la couche intermédiaire et la partie saillante est formée de façon à s'étendre en direction de l'extérieur à partir d'une seconde région de surface de la couche intermédiaire, la seconde région de surface étant différente de la première région de surface.

4. Matériau d'aluminium revêtu de carbone selon la revendication 1, le matériau d'aluminium contenant du carbone étant utilisé de façon à configurer une structure d'électrode.

5. Matériau d'aluminium revêtu de carbone selon la revendication 4, la structure d'électrode étant chacun(e) parmi un collecteur de courant et une électrode de condensateur.

6. Matériau d'aluminium revêtu de carbone selon la revendication 4, la structure d'électrode étant chacun(e) parmi un collecteur de courant et une électrode de batterie.

7. Procédé de fabrication d'un matériau d'aluminium revêtu de carbone, comprenant les étapes suivantes :

une étape de formation de couche de résine consistant à former une couche de résine sur une surface de chaque particule contenant du carbone ;

une étape d'adhésion de particules contenant du carbone consistant à amener chaque particule contenant du carbone revêtue de résine à adhérer à une surface d'un matériau d'aluminium, chaque particule contenant du carbone revêtue de résine ayant la résine formée sur celle-ci lors de l'étape de formation de couche de résine ; et

une étape de chauffage consistant à placer le matériau d'aluminium et les particules contenant du carbone revêtues de résine dans un espace incluant une substance contenant un hydrocarbure et à chauffer le matériau d'aluminium et les particules contenant du carbone revêtues de résine dans celui-ci,

dans lequel une couche organique est formée à partir de la couche de résine sur une surface de chacune des particules contenant du carbone revêtues de résine par l'étape de chauffage, la couche organique incluant au moins des éléments carbone, hydrogène et oxygène, et l'épaisseur de la couche organique étant supérieure ou égale à 1 nm et inférieure ou égale à 50 nm.

8.  Procédé de fabrication du matériau d'aluminium revêtu de carbone selon la revendication 7, dans lequel l'étape de formation de la couche de résine comprend une étape consistant à mélanger les particules contenant du carbone et un liant inclus dans la couche de résine.

9.  Procédé de fabrication d'un matériau d'aluminium revêtu de carbone selon la revendication 7, dans lequel l'étape de chauffage est menée à une température dans une plage supérieure ou égale à 450 °C et inférieure à 660 °C.

FIG.1

FIG.2

FIG.3

SE 2

Z x ρ color map

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000164466 A
- JP 2003342702 A
- WO 2004087984 A
- EP 1798742 A1
- WO 2008142913 A1
- EP 1609878 A1